(19) Europäisches Patentamt
European Patent Office
Office européen des brevets

(11) **EP 2 230 849 A1**

(12) **EUROPEAN PATENT APPLICATION**

(43) Date of publication:
**22.09.2010 Bulletin 2010/38**

(51) Int Cl.:
*H04N 7/26* (2006.01)    *H04N 7/36* (2006.01)
*H04N 7/50* (2006.01)

(21) Application number: **09155696.9**

(22) Date of filing: **20.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Mitsubishi Electric R&D Centre Europe B.V.**
  **20 Frederick Sanger Road**
  **The Surrey Research Park**
  **Guildford, Surrey GU2 7YD (GB)**

• **MITSUBISHI ELECTRIC CORPORATION**
  **Chiyoda-ku**
  **Tokyo 100-8310 (JP)**

(72) Inventors:
• **Wu, Ping**
  **Southampton SO16 3PU (GB)**
• **Cieplinski, Leszek**
  **Guildford, Surrey GU1 2UF (GB)**

(74) Representative: **HOFFMANN EITLE**
  **Patent- und Rechtsanwälte**
  **Arabellastrasse 4**
  **81925 München (DE)**

(54)    **Encoding and decoding video data using motion vectors**

(57)    A method of adaptively encoding and decoding frames of video data is disclosed. Luma and chroma colour components of each frame of video data are divided into macroblocks, wherein each macroblock comprises at least one block. At least two candidate coding schemes are provided for each macroblock. A first candidate coding scheme applies a motion vector for each block in the luma component of the data to all luma and chroma components of the data. A first rate-distortion cost measure is calculated for the first candidate coding scheme that is representative of both the distortion of the original video data introduced by the first coding scheme and the bit rate required to support the first coding scheme. A second candidate coding scheme applies a motion vector to each block of a luma component of the data and further applies a separate motion vector for each block in a chroma component of the data. A second rate-distortion cost measure is then calculated for the second candidate coding scheme that is representative of both the distortion of the original data introduced by the second coding scheme and the bit rate required to support the second coding scheme. For each macroblock, the candidate coding scheme with the lowest rate-distortion cost measure is then selected. The coding scheme is therefore advantageously adapted in accordance with bit rate and distortion requirements.

Figure 3

**EP 2 230 849 A1**

## Description

### Field of the invention

The present invention relates to enhanced coding and decoding of video by improved representation of motion.

### Background to the Invention

The video coding standards like ISO/IEC 11172-2 (also known as MPEG-1 video), ISO/IEC 13818-2 (also known as MPEG-2 video or H.262), ISO/IEC 14496-2 (also known as MPEG-4 part-2 or H.263) and ISO/IEC 14496-10 (also known as MPEG-4 AVC or H.264 and described in H.246/MPEG-4 part-10 AVC: ITU-T H.264 and ISO/IEC 14496-10) have achieved great success in the market places.

The MPEG-1 standard has been used by millions of VCD boxes worldwide; the MPEG-2 video standard formed foundations for DVD and digital television applications; the MPEG-4 part-2 technology has been picked up by many mobile phone applications; and the state of the art video coding standard H.264/MPEG-4 part-10/AVC provided a new generation video compression technology for HD-DVD and HD digital television broadcast as well as the current video conferencing deployment.

Motion Compensation (MC) is a key technology in video compression. Video sequences consist of a sequence of frames or pictures. For adjacent pictures, there usually are similarities; therefore, some region in the current picture can be predicted reasonably well from some regions in the previous pictures. By doing so, part of the video information in the current picture can be made redundant and, in turn, video compression can be achieved. The position of the video data from the previous picture used to predict the particular region in the current picture is shifted in both vertical and horizontal directions in order to compensate for the motion occurring in the scene; hence the term motion compensated prediction or simply motion compensation. In motion-compensation, the indication of the region in the previous picture is done by indicating a horizontal offset "x" and a vertical offset "y". A combined offset (x, y) is called a motion vector (MV).

Motion vectors (MVs) are usually associated with video data of different block sizes. The typical block sizes used in video coding are: 16x16, 16x8, 8x16, 8x8, 8x4, 4x8, 4x4. Larger block sizes have also been considered and are currently being investigated, particularly for use with large video picture sizes.

In all the above-mentioned existing video compression technologies, which are primarily targeting 4:2:0 video data format, the luma motion vectors are used for the luma sample prediction as well as chroma sample prediction. Usually video data consist of three components at one time instance. These components can be RGB (red, green, blue) or YCbCr (YUV). In YUV format, the Y component is called the luma plane and the U and V components are called the chroma planes. For 4:2:0 YUV format, 4 luma samples are joined by one U sample and one V sample at 2x2 pixel locations. For 4:4:4 YUV video data format, a single luma sample is joined by one U sample and one V sample at the same pixel location. Thus, in 4:4:4 video data format, all three colour planes will have an equal amount of video samples.

A video coding standard specification defines the decoding process. In the existing MPEG video standards, the motion vector for motion compensation is shared between the colour components (typically luma, describing the luminance or brightness of the image and two chroma components, describing the colour characteristics). Usually the motion vectors are derived based on the properties of the luma component, but joint motion estimation schemes, utilising all the components at the same time are also used. In ether case, however, only one motion vector is sent in the bitstream for all colour components of a given block.

In the MPEG-4 AVC standard, there are two profiles for 4:4:4 video data format. In the so-called "common mode" profile, the chroma samples are encoded jointly with the luma samples by using the luma motion vector for chroma samples. In another profile, sometimes referred to as the "independent mode" profile, the three colour components are coded separately and each component, including the two chroma components, has its own motion vector completely independent from each other. This is described for example in the paper "On Separate Color-Plane Prediction for Direct 4:4:4 Video Coding" by Sekiguchi et al in Proceedings on 2006 IEEE Conference on Image Processing, ISBN 1-4244-0481-9.

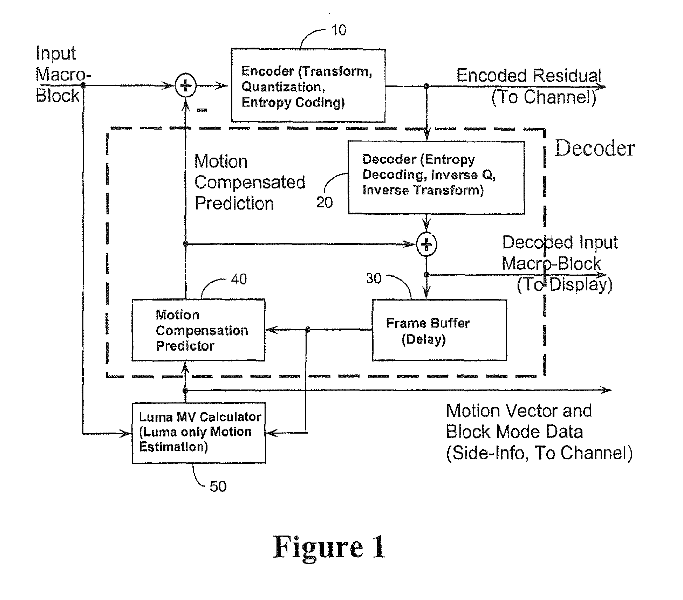

Figure 1 illustrates the MPEG-4 AVC encoding and decoding process. The components and processes shown in Figure 1 are conventional and well-known to the person skilled in the art, and therefore these components and processes will not be described here.

In US patent 6,272,179, a video coding system is described, where, in addition to the image data, the information about shapes of the visible objects is also transmitted. The system incorporates the sending of separate motion vectors for the shape data coding in order to improve the efficiency of the coding of the shapes, which are claimed to have different properties in this respect from image data. In order to make the coding of the shape motion vectors more efficient, their values are first predicted from the corresponding image data motion vectors and only the differences are encoded.

The previous codecs suffer from a number of problems, however. In particular, previous codecs sometimes do not provide sufficiently good prediction for the chroma components resulting in suboptimal performance.

Furthermore, a significant amount of information needs to be introduced into the bistream to define the motion vectors used to encode the video data. For example, in some video codecs, such as MPEG-4 AVC, the motion vectors can point into different previous pictures. For this reason, it is necessary to indicate the reference frame index if a motion vector is specified. In addition, as noted above, motion vectors can be associated with blocks of different block sizes, so information defining the block size also needs to be transmitted.

**Summary of the Invention**

According to the present invention, there is provided an apparatus operable to process video data comprising frames of at least first and second colour component data to generate encoded video data, the apparatus comprising:

a macroblock generator operable to divide frames of the first colour component data into first colour component macroblocks, each comprising one or more blocks, and operable to divide frames of the second colour component data into second colour component macroblocks, each comprising one or more blocks;

a motion vector generator operable to generate motion vectors for the blocks of the first colour component data using at least the first colour component data and to generate motion vectors for the blocks of the second colour component data using at least the second colour component data;

a cost calculator to perform processing for each macroblock so as to:

calculate a first cost measure for performing a first type of encoding comprising encoding the macroblock video data in the first colour component and the second colour component using the motion vector(s) generated for blocks of the first colour component data alone, the cost measure comprising a function of the number of bits in the encoded data and a measure of distortion introduced by encoding the video data using the first type of encoding;

calculate a second cost measure for performing a second type of encoding comprising encoding the macroblock video data in the first colour component using the motion vectors generated for blocks of the first colour component data and encoding the macroblock video data in the second colour component using the motion vectors generated for blocks of the second colour component data, the cost measure comprising a function of the number of bits in the encoded data and a measure of distortion introduced by encoding the video data using the second type of encoding; and

a selector operable to compare the first cost measure and the second cost measure for a macroblock to generate a comparison result, and to select between the first type of encoding and the second type of encoding in dependence upon the comparison result.

The apparatus may be arranged to perform the method set out in any of Claims 2 to 9.

The present invention also provides a method of encoding video data macroblocks, each macroblock having data of a first colour component and data of a second colour component, the method comprising:

calculating a motion vector for each block of a macroblock in the first colour component data;

calculating a motion vector for each block of a macroblock in the second colour component data;

calculating for each macroblock:

a first encoding cost measure in dependence upon the number of bits resulting from performing a first type of encoding comprising encoding the first and second colour component data of the macroblock using one or more motion vectors for blocks of only the first colour component data and a measure of the distortion of the video data resulting from performing the first type of encoding;
and
a second encoding cost measure in dependence upon the number of bits resulting from performing a second type of encoding comprising encoding the first colour component data of the macroblock using one or more motion vectors for blocks of the first colour component data and encoding the second colour component data of the macroblock using one or more motion vectors for blocks of the second colour component data, and a measure of distortion of the video data resulting from performing the second type of encoding; and
selecting between the first type of encoding and the second type of encoding for each macroblock in dependence upon the first and second encoding cost measures.

The present invention also provides a method of encoding video data for a region of a frame, the video data having first, second and third colour components and the method comprising:

performing a first type of encoding in which the data of the first, second and third colour components is encoded using at least one motion vector determined from the data of the first colour component;

performing a second type of encoding in which the data of the first colour component is encoded using at least one motion vector determined from the data of the first colour component, the data of the second colour component is encoded using at least one motion vector determined from the data of the second colour component, and the data of the third colour component is encoded using at least one motion vector determined from the data of the second colour component or the data of the third colour component; and

selecting between the first type of encoding and the second type of encoding in dependence upon a number of bits resulting from performing the first type of encoding, a number of bits resulting from performing the second type of encoding, a distortion of the video data resulting from performing the first type of encoding, and a distortion of the video data resulting from performing the second type of encoding.

The present invention also provides a method of decoding video data, comprising:

receiving a bitstream comprising frames of at least first and second colour components divided into regions and encoded such that, for each region, the first colour component data is encoded using at least one motion vector generated from the first colour component data, and the second colour component data is encoded using at least one motion vector generated from the first colour component data or at least one motion vector generated from the second colour component data;

receiving information for each region defining whether the second colour component data is encoded using at least one motion vector generated from the first colour component data or at least one motion vector generated from the second colour component data; and

decoding the encoded video data for each region adaptively such that:

the first colour component data is decoded by calculating at least one motion vector for the region using previously decoded data of the first colour component and decoding the video data of the region using the calculated motion vector(s) of the first colour component;

when the information defines the encoding of the second colour component as encoding using motion vector (s) of the first colour component, the second colour component data is decoded by calculating at least one motion vector for the region using previously decoded data of the first colour component and decoding the video data of the region using the calculated motion vector(s) of the first colour component; and

when the information defines the encoding of the second colour component as encoding using motion vector (s) of the second colour component, the second colour component data is decoded by calculating at least one motion vector for the region using previously decoded data of the second colour component and decoding the video data of the region using the calculated motion vector(s) of the second colour component.

The present invention also provides a video data decoder operable to perform a method as set out in Claim 10.
The present invention also provides a video data decoder operable to perform a method as set out in Claim 11.
The present invention also provides a computer program product, such as a computer-readable storage medium storing computer program instructions or a signal carrying computer program instructions, to program a programmable processing apparatus to become operable to perform the method of the present invention.
An embodiment of the invention allows the video encoder and decoder to use independent motion vectors for all the colour components in an adaptive way, so that the additional motion vectors are only sent when they improve motion-compensated prediction sufficiently to justify the additional bitrate used, otherwise, the motion vector for the luma component is used for the chroma components.

An embodiment of the invention provides video coding which achieves improved compression performance by adaptively providing additional motion vectors for the chroma components of the video frame based on the improvement they provide in predicting the current frame.

**Brief Description of the Drawings**

Embodiments of the present invention will now be described, by way of example only, with reference to the accompanying drawings, in which like reference numbers designate like components and processes, and in which:

Figure 1 is a block diagram of a conventional MPEG-4 AVC encoder and decoder;

Figure 2 illustrates a block diagram of apparatus components and processes for calculation of independent chroma motion vectors in an embodiment of the present invention;

Figure 3 illustrates a block diagram of apparatus components and processes for selection of motion vectors using rate-distortion optimisation in an embodiment of the present invention; and

Figure 4 illustrates how the search range for chroma component motion vectors is constrained using a target and L-shaped template in an embodiment of the present invention.

**Embodiments of the Invention**

The embodiments set out below may comprise hardware, software or a combination of hardware and software to perform the described processes. Accordingly, an embodiment may be attained by supplying programming instructions to a programmable processing apparatus, for example, as data stored on a data storage medium (such as an optical CD ROM, semiconductor ROM, magnetic recording medium, etc.), and/or as a signal (for example an electrical or optical signal) input to the programmable processing apparatus, for example from a remote database, by transmission over a communication network such as the Internet or by transmission through the atmosphere.

*First Embodiment*

Embodiments of the present invention improve the performance of video coding by providing motion vector information for all colour components of the video when it is justified by the improvement in motion compensated prediction quality for these components.

This approach can be used for video data with any colour sampling format (including the 4:2:0 format, which is currently the most popular for consumer applications) but it is particularly beneficial when chroma components are sampled with relatively high density (such as the 4:4:4 format).

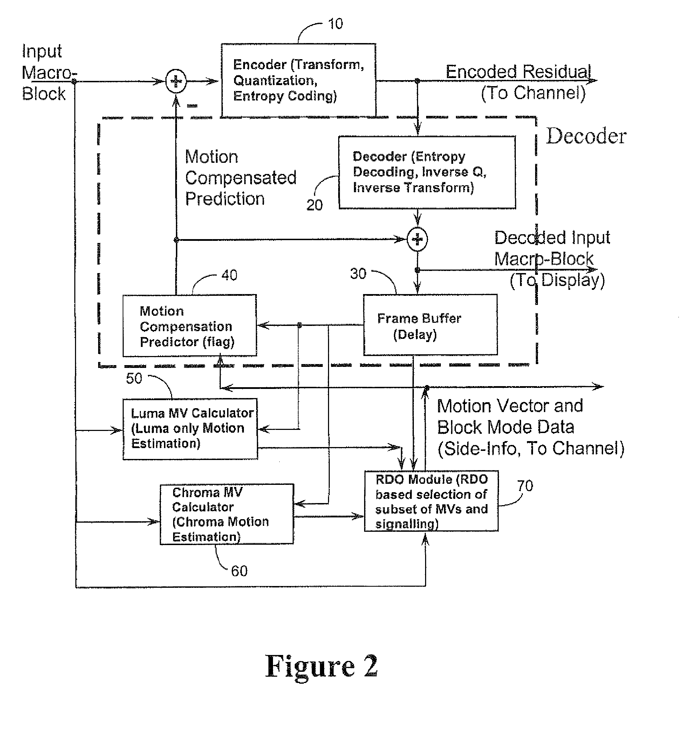

The changes in the overall encoding process when the independent chroma motion vector mode is in operation compared to a state of the art codec are highlighted in Figure 2.

For the signalling of the independent chroma motion vectors inside the video bitstream, the present embodiment allows separate motion vectors for the chroma components to be sent in addition to the usual luma component motion vectors. In order to achieve the optimal trade-off between improved prediction quality and overhead resulting from the sending of the additional information (such as motion vectors, reference picture indexes and macroblock partitioning information) necessary for the separate motion compensation for chroma components, the benefit from the use of this additional information is evaluated in the encoder and the additional information is only sent when the overhead can be justified by the reduction in the prediction error.

In the following, the first embodiment of the invention is described, followed by additional embodiments corresponding to different requirements and constraints. The colour space components are referred to as Y, U, and V but the invention is equally applicable to any colour space with at least 2 colour components. For example, the invention is applicable to R,G,B colour space, in which the G component would be used in place of the luma component in the processing described below.

The motion estimation and compensation processes remain similar as in the case when a single motion vector is used for all components. The main difference in the motion estimation is that a chroma motion vector calculator 60 is provided to perform an additional motion estimation process for the chroma components, and an RDO module 70 is provided to perform a rate distortion optimised (RDO) selection process to determine whether video data encoded using the luma motion vectors alone or video data encoded using the luma motion vectors and the separate chroma motion vectors should be transmitted.

In order to reduce computational complexity and improve the correlation between motion vectors for more efficient entropy coding, the value of the optimum luma motion vector from the luma motion vector calculator 50 is used by the chroma motion vector calculator 60 to initialise the motion vector search for the chroma components.

The motion compensation process differs from the state of the art approach in that the separate chroma motion vector is recovered from the bitstream. Once the chroma motion vector is obtained, it is used in the same way as for the case of a joint motion vector.

The present embodiment provides signalling of additional information necessary for separate chroma motion compensation, such that the additional information can be recovered and utilised in the decoder.

The signalling of the chroma motion information comprises additional syntax elements in the bitstream at several levels. At the sequence level (in sequence parameter set) and/or at the picture level (in picture parameter set) it is specified that the independent chroma motion vectors are enabled. If there are two chroma components, say U and V, the present embodiment also indicates whether there are an independent U motion vector and independent V motion vector, or whether only one chroma motion vector which will be shared by the U and V components.

The signalling is designed in such a way that further indication of the reference picture index and the block partition message for the chroma components is avoided; specifically, the reference picture index and the block partition information for the luma is re-used and un-changed for the chroma for the same block.

The signalling of the independent chroma motion vectors is achieved by a flag set at the macroblock level, denoted as "IndeChromaMotionVector". When this flag is "1", the additional chroma motion vector is sent in the bitstream; when it is "0", no additional chroma motion vector is used and the scheme automatically falls back to the luma-only motion vector scheme of the conventional video codec.

Tables 1, 2 and 3 below show an example of a specific syntax used in the present embodiment for the additional signalling described above, using the conventions defined in the MPEG-4 AVC standard. It will, of course, be understood that other signalling syntaxes could be used instead.

Table 1 shows the changes to the MPEG-4 AVC macroblock layer syntax performed for the signalling of the IndeChromaMotionVector flag. In Table 2, the modified syntax for the signalling of the chroma motion vector differences is given. In Table 3, the modified syntax for the signalling of the chroma U and V motion vector differences is given.

### Table 1: The signalling of the IndeChromaMotion Vector flag

| macroblock_layer( ) { | C | Descriptor |
|---|---|---|
| If ( slice_type != I )   IndeChromaMotionVector | 2 | ue(v) \| ae(v) |
| mb_type | 2 | ue(v) \| ae(v) |
| if( mb_type = = I_PCM ) { | | |

| | | |
|---|---|---|
| while( !byte_aligned() ) | | |
| **Pcm_alignment_zero_bit** | 2 | f(1) |
| for( i = 0; i < 256 * ChromaFormatFactor; i++) | | |
| **Pcm_byte[ i ]** | 2 | u(8) |
| } else { | | |
| if( MbPartPredMode( mb_type, 0 ) != Intra_4x4 && MbPartPredMode( mb_type, 0 ) != Intra_16x16 && NumMbPart( mb_type ) == 4 ) | | |
| sub_mb_pred( mb_type ) | 2 | |
| Else | | |
| mb_pred( mb_type ) | 2 | |
| . . . . . . | | |
| } | | |
| } | | |
| } | | |

## Table 2: The modified syntax on signalling the chroma MVD

| mb_pred( mb_type ) { | C | Descriptor |
|---|---|---|
| if( MbPartPredMode( mb_type, 0 ) = = Intra_4x4 \|\| MbPartPredMode( mb_type, 0 ) = = Intra_16x16 ) { | | |
| ...... | | |
| } else if( MbPartPredMode( mb_type, 0 ) != Direct ) { | | |
| for( mbPartIdx = 0; mbPartIdx < NumMbPart( mb_type ); mbPartIdx++) | | |
| if( ( num_ref_idx_l0_active_minus1 > 0 \|\| mb_field_decoding_flag ) && MbPartPredMode( mb_type, mbPartIdx ) != Pred_L1 ) | | |
| **ref_idx_l0**[ mbPartIdx ] | 2 | te(v) \| ae(v) |
| for( mbPartIdx = 0; mbPartIdx < NumMbPart( mb_type ); mbPartIdx++) | | |
| if( ( num_ref_idx_l1_active_minus1 > 0 \|\| mb_field_decoding_flag ) && MbPartPredMode( mb_type, mbPartIdx ) != Pred_L0 ) | | |
| **ref_idx_l1**[ mbPartIdx ] | 2 | te(v) \| ae(v) |
| for( mbPartIdx = 0; mbPartIdx < NumMbPart( mb_type ); mbPartIdx++) | | |
| if( MbPartPredMode ( mb_type, mbPartIdx ) != Pred_L1 ) | | |
| for( compIdx = 0; compIdx < 2; compIdx++ ) | | |
| **mvd_l0**[ mbPartIdx ][ 0 ][ compIdx ] | 2 | se(v) \| ae(v) |
| for( mbPartIdx = 0; mbPartIdx < NumMbPart( mb_type ); mbPartIdx++) | | |

| | | |
|---|---|---|
| if( MbPartPredMode( mb_type, mbPartIdx ) != Pred_L0 ) | | |
| for( compIdx = 0; compIdx < 2; compIdx++ ) | | |
| **mvd_l1**[ mbPartIdx ][ 0 ][ compIdx ] | 2 | se(v) \| ae(v) |
| If (IndeChromaMV == 1) { | | |
| for( mbPartIdx = 0; mbPartIdx < NumMbPart( mb_type ); mbPartIdx++) | | |
| if( MbPartPredMode ( mb_type, mbPartIdx ) != Pred_L1 ) | | |
| for( compIdx = 0; compIdx < 2; compIdx++ ) | | |
| **Chroma_mvd_l0**[ mbPartIdx ][ 0 ][ compIdx ] | 2 | se(v) \| ae(v) |
| for( mbPartIdx = 0; mbPartIdx < NumMbPart( mb_type ); mbPartIdx++) | | |
| if( MbPartPredMode( mb_type, mbPartIdx ) != Pred_L0 ) | | |
| for( compIdx = 0; compIdx < 2; compIdx++ ) | | |
| **Chroma_mvd_l1**[ mbPartIdx ][ 0 ][ compIdx ] | 2 | se(v) \| ae(v) |
| } | | |
| } | | |
| } | | |

## Table 3: The modified syntax on signalling the chroma U and V MVD

| mb_pred( mb_type ) { | C | Descriptor |
|---|---|---|
| if( MbPartPredMode( mb_type, 0 ) = = Intra_4x4 ||<br>    MbPartPredMode( mb_type, 0 ) = = Intra_16x16 ) { |  |  |
|         …… |  |  |
| } else if( MbPartPredMode( mb_type, 0 ) != Direct ) { |  |  |
|     for( mbPartIdx = 0; mbPartIdx < NumMbPart( mb_type ); mbPartIdx++) |  |  |
|         if( ( num_ref_idx_l0_active_minus1 > 0 ||<br>             mb_field_decoding_flag ) &&<br>             MbPartPredMode( mb_type, mbPartIdx ) != Pred_L1 ) |  |  |
|             **ref_idx_l0**[ mbPartIdx ] | 2 | te(v) | ae(v) |
|     for( mbPartIdx = 0; mbPartIdx < NumMbPart( mb_type ); mbPartIdx++) |  |  |
|         if( ( num_ref_idx_l1_active_minus1 > 0 ||<br>             mb_field_decoding_flag ) &&<br>             MbPartPredMode( mb_type, mbPartIdx ) != Pred_L0 ) |  |  |
|             **ref_idx_l1**[ mbPartIdx ] | 2 | te(v) | ae(v) |
|     for( mbPartIdx = 0; mbPartIdx < NumMbPart( mb_type ); mbPartIdx++) |  |  |
|         if( MbPartPredMode ( mb_type, mbPartIdx ) != Pred_L1 ) |  |  |
|             for( compIdx = 0; compIdx < 2; compIdx++ ) |  |  |
|                 **mvd_l0**[ mbPartIdx ][ 0 ][ compIdx ] | 2 | se(v) | ae(v) |
|     for( mbPartIdx = 0; mbPartIdx < NumMbPart( mb_type ); mbPartIdx++) |  |  |

| | | |
|---|---|---|
| if( MbPartPredMode( mb_type, mbPartIdx ) != Pred_L0 ) | | |
| for( compIdx = 0; compIdx < 2; compIdx++ ) | | |
| **mvd_l1**[ mbPartIdx ][ 0 ][ compIdx ] | 2 | se(v) \| ae(v) |
| If (IndeChromaMV == 1) { | | |
| for( mbPartIdx = 0; mbPartIdx < NumMbPart( mb_type ); mbPartIdx++ ) | | |
| if( MbPartPredMode ( mb_type, mbPartIdx ) != Pred_L1 ) | | |
| for( compIdx = 0; compIdx < 2; compIdx++ ) | | |
| **Chroma_U_mvd_l0**[ mbPartIdx ][ 0 ][ compIdx ] | 2 | se(v) \| ae(v) |
| for( mbPartIdx = 0; mbPartIdx < NumMbPart( mb_type ); mbPartIdx++ ) | | |
| if( MbPartPredMode( mb_type, mbPartIdx ) != Pred_L0 ) | | |
| for( compIdx = 0; compIdx < 2; compIdx++ ) | | |
| **Chroma_U_mvd_l1**[ mbPartIdx ][ 0 ][ compIdx ] | 2 | se(v) \| ae(v) |
| for( mbPartIdx = 0; mbPartIdx < NumMbPart( mb_type ); mbPartIdx++ ) | | |
| if( MbPartPredMode ( mb_type, mbPartIdx ) != Pred_L1 ) | | |
| for( compIdx = 0; compIdx < 2; compIdx++ ) | | |
| **Chroma_V_mvd_l0**[ mbPartIdx ][ 0 ][ compIdx ] | 2 | se(v) \| ae(v) |
| for( mbPartIdx = 0; mbPartIdx < NumMbPart( mb_type ); mbPartIdx++ ) | | |
| if( MbPartPredMode( mb_type, mbPartIdx ) != Pred_L0 ) | | |
| for( compIdx = 0; compIdx < 2; compIdx++ ) | | |
| **Chroma_V_mvd_l1**[ mbPartIdx ][ 0 ][ compIdx ] | 2 | se(v) \| ae(v) |
| } | | |
| } | | |
| } | | |

When the independent chroma motion vectors are used, they are sent in a similar way as the luma motion vector differences. However, a difference is that the chroma motion vector differences, which are denoted as chroma_mvd_l0, chroma_mvd_l1, chroma_U_mvd_l0, chroma_U_mvd_l1, chroma_V_mvd_l0 and chroma_V_mvd_l1 in Tables 2 and 3, are calculated against the corresponding luma motion vectors for the same block. The chroma motion vector differences are calculated by using chroma motion vector minus luma motion vector directly in this case. In other variations, for indication of the independent chroma motion vector, the chroma motion vector difference (sometimes called the offset) is calculated by using chroma motion vector minus a motion vector predictor value; this predictor value can be associated with the luma motion vector or other relevant chroma motion vectors.

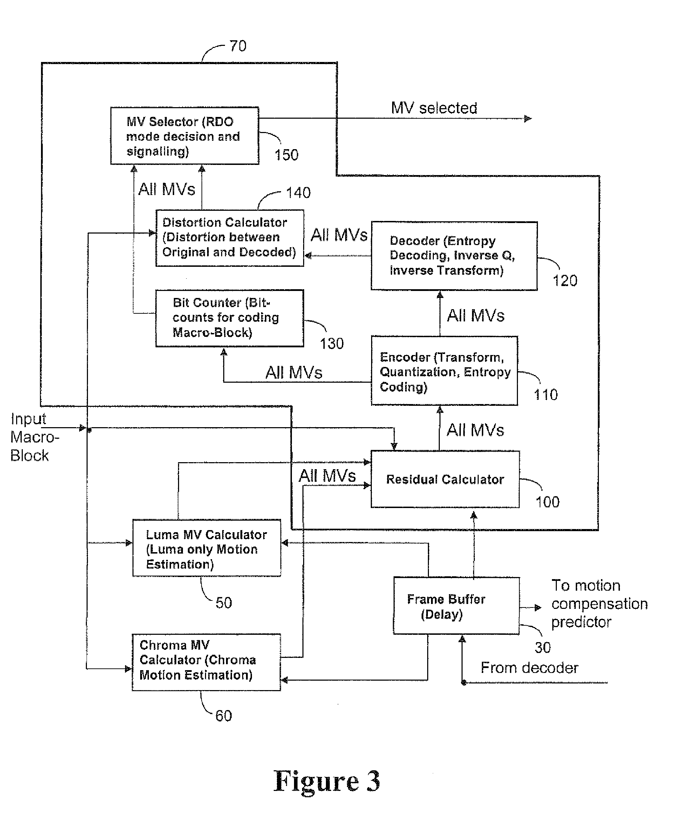

The most appropriate coding mode for each macroblock and the most appropriate set of motion vectors for each block are selected by RDO module 70 using a rate distortion optimised process. For every single candidate set of motion vectors, the complete encoding is conducted. With measuring the distortion and the bits in consumption, the one with the smallest cost function value will be selected to go through the final coding. Figure 3 shows the components and functions for performing selection using rate-distortion optimisation in the present embodiment.

Referring to Figure 3, all the candidate motion vectors pass through the rate distortion optimization in a parallel fashion. Thus, multiple coding paths co-exist.

The luma motion vector calculator 50 calculates a motion vector for each block in a macroblock using only the luma component. The chroma motion vector calculator 60 calculates, for the same macroblock, a separate motion vector for each block in the U chroma component and a separate motion vector for each block in the V chroma component. Decoded data for the macroblock is received and delayed by the frame buffer 30. The residual calculator 100 then performs a residual calculation for the macroblock in a conventional way. The motion vectors for the luma component, the U chroma component and the V chroma component are then passed to the encoder 110, which encodes the macroblock using:

- only the luma motion vector(s) to encode each of the luma data, the U chroma data and the V chroma data;
- the luma motion vector(s) to encode the luma data, and one chroma motion vector to encode both the U chroma data and the V chroma data; and
- the luma motion vector(s) to encode the luma data, the U chroma motion vector(s) to encode the U chroma data and the V chroma motion vector(s) to encode the V chroma data.

The resulting encoded data from each of the three types of encoding above is then passed to the decoder 120, where the data is decoded. In addition, the encoded data from all three types of encoding processes is passed to the bit counter 130, which determines the number of bits in each set of encoded data for the current macroblock.

The original video data for the macroblock is passed to the distortion calculator 140, together with the decoded data for each of the three separate types of encoding produced by the decoder 120. The distortion calculator compares the original video data with the decoded video data for each of the three separate types of encoding and calculates a respective distortion measure of the video data resulting from performing encoding and decoding in accordance with each of the three different encoding processes described above, namely encoding with:

- only the luma motion vector(s) for each of the luma data, the U chroma data and the V chroma data;
- the luma motion vector(s) for the luma data, and one chroma motion vector for both the U chroma data and the V chroma data; and
- the luma motion vector(s) for the luma data, the U chroma motion vector(s) for the U chroma data and the V chroma motion vector(s) for the V chroma data.

Based upon the distortion measure for each type of encoding and the bit count for each type of encoding, MV selector 150 selects one type of encoded data as the encoded data to be transmitted. More particularly, MV selector 150 calculates a respective rate-distortion cost for each type of encoding in accordance with the following function:

$$J = D + \lambda \cdot R \qquad\qquad (1)$$

where J is the calculate cost, D is the distortion introduced by coding and decoding, X comprises Lagrangian parameters, and R is the number of bits in the encoded signal and is thus representative of the transmission bit rate.

This method is based on the principle of jointly minimizing both distortion D and rate R using an equation with a form in equation (1). The Lagrangian Parameters ($\lambda$) play a role to balance the relationship between D and R.

MV selector 150 then selects the type of encoding having the smallest calculated cost *J* as the type of encoding to be used for transmitting the current macroblock.

Thus, in the present embodiment, a cost J will be calculated for every set of motion vector combinations for the macroblock (some of them only with luma motion vectors and some of them with both luma motion vectors and chroma motion vectors). This means there are a number of Js. The smallest J is chosen for the real coding path. Each set of the motion vectors may involve different block partitions (say, formed with a single 16x16 block size in luma, or formed by 4 8x8 block size, for luma, etc.). However, irrespective of the block partitioning, the J will be calculated for the complete macroblock as a whole. In more detail, for a case involving a 4 8x8 block size (luma), the present embodiment calculates 4 "sub" Js (each of them for one 8x8 block) and then adds them together for a single J for that 16x16 macroblock.

*Variations of the First Embodiment*

In the following, variations in the details of the first embodiment are described, in particular for indication of the independent chroma motion vector.

In a first variation, the motion vector search performed by the chroma motion vector calculator 60 for the chroma components is started from a predictor obtained in the same way as a predictor for the entropy coding of the motion vector difference in MPEG-4 AVC standard, but using the neighbouring chroma motion vectors instead of luma motion vectors. In a further variation, when a separate chroma motion vector is used, for the V component, the search for this motion vector is started from the optimum motion vector for the U component.

In a second variation, the information about the reference picture index and macroblock partitioning and sub-partitioning are adaptively indicated for each macroblock. They are only coded, when the additional overhead is justified by the corresponding improvement in the prediction quality using the rate-distortion optimisation process as outlined above. In order to minimise the additional overhead, the presence of the additional reference picture index and macroblock partitioning information are signalled using additional entropy-coded flags. The reference picture indexes are encoded as the difference from the luma reference picture indexes. Similarly, the macroblock partitioning information for the chroma components is encoded with reference to the luma component.

In a third variation, the additional motion information is adaptively sent separately for each chroma component. Specifically, if the rate distortion optimised mode decision process indicates that it is beneficial to send any of reference picture index, macroblock partitioning and/or motion vector information separately for each chroma component, this information is included in the bitstream. Instead of having a single flag for both chroma components, two flags are introduced, each indicating the presence of the corresponding component motion information. The two indication flags can be encoded as a combined syntax element or the second flag as a conditional flag to the first flag, i.e., the first flag will indicate whether the independent chroma motion vector is used or not: if it is not, the second flag will be ignored by the decoder parsing process; if it is used, then the second flag will indicate whether it is a joint chroma motion vector (for both U and V) or independent U and V motion vectors.

In a fourth variation, the coding of the chroma motion vector against the predictor is changed in one of a number of ways. The predictor is set as one from a set of candidates: the luma predictor for the whole macroblock, the chroma motion vector from neighbouring macroblocks. In another variation, if the motion, vectors for both chroma components are coded, the predictor for the V component is set as the motion vector of the U component for the same block.

In a fifth variation, instead of signalling the set of motion vector predictors in the video sequence or picture level, the set is locally adapted based on the characteristics of the neighbouring motion vectors and previously received motion vectors for other components (luma or U component) for the current block. In one particular implementation, the similarity between the luma motion vector for the current block and the neighbouring block is evaluated. If the similarity is judged to be sufficiently high, the chroma motion vector for the same neighbouring block is used as the predictor. The similarity can be evaluated by using Euclidean distance and comparing its value to a predetermined threshold.

*Second Embodiment*

In the first embodiment, the motion vector values are indicated in the bitstream. The decoder can then obtain the exact motion vector value through an entropy decoding process from the bitstream. However, it is possible to design a video encoder and corresponding video decoder in which not all motion vectors need to be sent to the decoder. In the so-called decoder-side motion vector derivation, the encoder and the decoder can retrieve the exact motion vectors used at the encoder avoiding any mismatch between the encoding and the decoding. Such a scheme is described for conventional luma-only motion vectors in Steffen Kamp, Michael Evertz, Mathias Wien: Decoder side motion vector derivation for inter frame video coding, ICIP 2008: 1120-1123.

The second embodiment implements a decoder-side motion vector derivation scheme for the chroma motion vectors of the first embodiment. The second embodiment therefore avoids the sending of the motion vectors in order to minimise the additional bitrate necessary for the additional chroma-related information. Instead, a mechanism is devised whereby the video decoder can follow the same steps as the encoder in order to establish the value of the additional motion vectors. The details are described below, with only the differences from the first embodiment included.

In the second embodiment, the use of the scheme is signalled at the sequence level (in the sequence parameter set) and/or at the picture level (in the picture parameter set). This includes the signalling of whether the U component and V component share a common motion vector or use separate motion vectors.

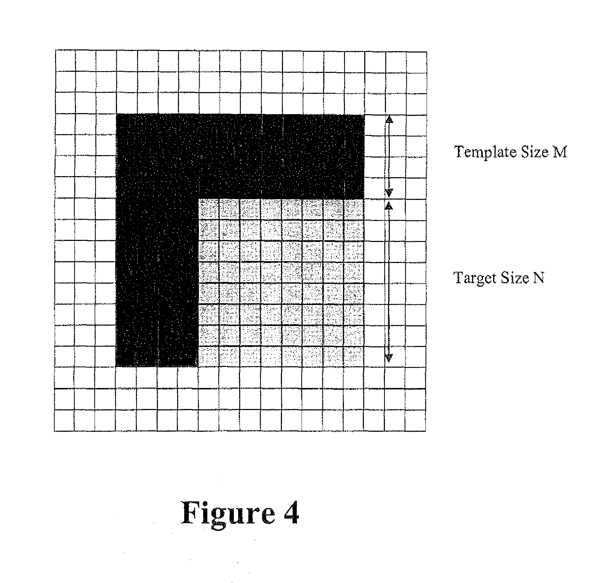

The search range for the motion estimation for the chroma components is limited in order to limit the additional computational complexity introduced in the decoder. This embodiment uses 4 integer pel in each search directions. An "L" shaped set of samples, selected so that the set comprises only samples that have already been reconstructed by the decoder, is used to locate the best matching motion vector position for chroma components as illustrated in Figure 4.

In Figure 4, the area marked in light grey colour and noted as Target Size N in one direction represents the current block (size N by N). The dark grey coloured area having an "L" shape and noted as Template Size M as one of its width represents the neighbouring regions of the current block. The reason that the "L" shaped template is used is as the follows: while the current block of video data (N by N) is being decoded, only available video samples, which are close to the current block and have already been decoded, are within the "L" shape. The decoder-side motion vector derivation can be completed by doing the following: use the "L" shaped template video data to search in a reference picture inside a search window which has a fixed search range; then rather than sending the motion vector values in the bitstreams, the decoder can derive the same motion vector by repeating the same process as the one performed in the encoder.

The decoder performs the motion estimation in exactly the same way as the encoder, so that it is possible to avoid sending any further bits to represent the chroma motion vecctors. In Figure 4, Target Size N is set by the current block size, normally it is 16, 8, or 4 (it can also be 32 or even 64); the proposed Template Size M can also be changed from the value of 4 used in the embodiment. In an alternative implementation, both the Target Size and Template Size parameters can be signalled at the video sequence or picture level.

As previously, a flag is used at the macroblock level in the bitstream, denoted as "TndeChromaMotionVector". When this flag is set to "1", the proposed independent chroma motion vector prediction is used; otherwise the chroma data prediction follows the luma motion vector as defined in the previous video coding standards.

Several approaches to limiting the computational complexity can be considered, including ideas based on previous studies of decoder-side motion vector derivation which is on luma motion vectors only (as described in Steffen Kamp, Michael Evertz, Mathias Wien: Decoder side motion vector derivation for inter frame video coding; ICIP 2008: 1120-1123). The additional possibilities offered by the availability of chroma motion vectors allow for a more flexible approach. In an alternative implementation utilising this approach, the motion vector search is limited to only the previously decoded motion vectors available in the decoder from the following set:

- The chroma motion vectors from surrounding blocks
- The luma motion vectors from surrounding blocks
- The luma motion vector from the same block
- For the V component, the U motion vector for the same block, if two separate chroma motion vectors are used.

In order to further limit the computational complexity, this set can be further reduced by excluding predefined categories of motion vectors. In an alternative implementation, the set of motion vector categories use for prediction is signalled at the video sequence or picture level.

In an alternative implementation, instead of signalling the set of motion vectors to be used in the search in the video sequence or picture level, the set is locally adapted based on the characteristics of the neighbouring motion vectors and previously received motion vectors for other components (luma or U component) for the current block. In one particular implementation, the similarity between the luma motion vector for the current block and the neighbouring block is evaluated. If the similarity is judged to be too low, both the luma and the chroma motion vectors for this neighbouring block are excluded from the search. The similarity can be evaluated by using Euclidean distance and comparing its value to a predetermined threshold.

The decision algorithm for selecting the best motion vector examines all possible candidates of the independent chroma motion vectors on the bits consumption and the decoded video quality it will bring. The one chroma motion vector which gives the best coding efficiency gain will be used in the video encoding. Similarly as above, it is impossible for the decoder to use the sample values for the current block in the calculation of prediction error. Therefore the neighbouring samples have to be used in a similar fashion as illustrated in Figure 4.

**Modifications and Variations**

Many modifications and variations can be made to the embodiments described above.

For example, in both embodiments, the motion vectors for the chroma components of a macroblock are calculated using one of the following techniques:

(a) A joint motion vector for use as the motion vector for both colour components is calculated using the colour component data of both colour components. In the embodiments, this is performed by merging the colour component data of both colour components and then calculating a joint motion vector using the merged data. However, it could be performed in a number of different ways, for example by calculating separate motion vectors, each using respective colour component data, and then merging the motion vectors into a joint motion vector.

(b) A motion vector is calculated for one chroma component (such as the U component) using only the colour component data for that one chroma component, and then a separate motion vector is calculated for the other chroma component (such as the V component) using only the colour component data for that other chroma component.

In this way, the encoder adaptively encodes the video data for each macroblock using (i) a luma motion vector alone, (ii) a luma motion vector and a joint chroma motion vector calculated using the video data of both chroma components, and (iii) three separate motion vectors comprising a respective motion vector for the lump component and each chroma component, in accordance with the calculated cost for each of these coding options.

However, as an alternative to (a) above, a motion vector for one chroma component (such as the U component) could be calculated using only the colour component data for that one chroma component, and then the calculated motion vector would be used for that chroma component and, in addition, re-used for the other chroma component (such as the V component). In this way, the encoder would adaptively encode the video data for each macroblock using (i) a luma motion vector alone, (ii) a luma motion vector and one chroma motion vector that is calculated using the data of one chroma component but used to encode the data of both chroma components and (iii) three separate motion vectors comprising a respective motion vector for the luma component and each chroma component, in accordance with the calculated cost for each of these coding options.

In the embodiments described above, the motion vectors for the luma component are generated using only the luma component data. However, instead, the chroma motion vectors could be calculated first and then used to calculate the luma motion vectors.

In a further modification, the embodiments described above could be arranged to select between two types of encoding instead of three types. For example, the embodiments could be arranged to select for each macroblock between a first type of encoding in which the video data for the macroblock is encoded using a luma motion vector alone, and a second type of encoding in which the video data of the macroblock is encoded using three separate motion vectors comprising a respective motion vector for the luma and each chroma component, in dependence upon the calculated cost for each of these two types of encoding.

Other modifications are, of course, possible.

## Claims

1.  A method of processing video data comprising frames of at least first and second colour component data to generate encoded video data, the method comprising:

    dividing frames of the first colour component data into macroblocks, each macroblock comprising one or more blocks;
    dividing frames of the second colour component data into macroblocks, each macroblock comprising one or more blocks;
    generating motion vectors for the blocks of the first colour component data using at least the first colour component data and generating motion vectors for the blocks of the second colour component data using at least the second colour component data; and
    generating encoded data using the generated motion vectors;
    wherein, for each macroblock, the method includes:

        calculating a first cost measure for performing a first type of encoding comprising encoding the macroblock video data in the first colour component and the second colour component using the motion vector(s) generated for the blocks of the first colour component data alone, the cost measure comprising a function of the number of bits in the encoded data and a measure of distortion introduced by encoding the video data using the first type of encoding;
        calculating a second cost measure for performing a second type of encoding comprising encoding the macroblock video data in the first colour component using the motion vectors generated for the blocks of the first colour component data and encoding the macroblock video data in the second colour component using the motion vectors generated for the blocks of the second colour component data, the cost measure comprising a function of the number of bits in the encoded data and a measure of distortion introduced by encoding the video data using the second type of encoding;
        comparing the first cost measure and the second cost measure to generate a comparison result; and
        selecting between the first type of encoding and the second type of encoding in dependence upon the comparison result.

2.  The method of Claim 1, wherein:

    the video data comprises frames of first, second and third colour components;
    the frames of the third colour component data are divided into macroblocks, each macroblock comprising one or more blocks;
    motion vectors are calculated for the blocks of the first colour component data using at least the first colour component data, separate motion vectors are calculated for the blocks of the second colour component data using at least the second colour component data and separate motion vectors are calculated for the blocks of the third colour component data using at least the third colour component data; and
    the encoding for each macroblock is performed by:

        calculating a first cost measure for performing a first type of encoding comprising encoding the macroblock video data in the first, second and third colour components using the motion vector(s) generated for the blocks of the first colour component data alone, the cost measure comprising a function of the number of bits in the encoded data and a measure of distortion introduced by encoding the video data using the first type of encoding;

calculating a second cost measure for performing a second type of encoding comprising encoding the macroblock video data in the first colour component using the motion vector(s) generated for the blocks of the first colour component data alone and encoding the macroblock video data in both the second and third colour components using the motion vector(s) generated for the blocks of the second colour component data, the cost measure comprising a function of the number of bits in the encoded data and a measure of distortion introduced by encoding the video data using the second type of encoding;

calculating a third cost measure for performing a third type of encoding comprising encoding the macroblock video data in the first colour component using the motion vector(s) generated for the blocks of the first colour component data, encoding the macroblock video data in the second colour component using the motion vector(s) generated for the blocks of the second colour component data and encoding the macroblock video data in the third colour component using the motion vector(s) generated for the blocks of the third colour component data, the cost measure comprising a function of the number of bits in the encoded data and a measure of distortion introduced by encoding the video data using the third type of encoding;

comparing the first, second and third calculated cost measures to generate a comparison result; and

selecting between the first, second and third types of encoding in dependence upon the comparison result.

3. The method of Claim 1 or Claim 2, wherein the motion vectors for the blocks of the second colour component are calculated using the motion vectors of the blocks of the first colour component to initialise searches for the motion vectors of the blocks of the second colour component.

4. The method of any preceding claim, wherein the first colour component comprises a luminance component and the second colour component comprises a chrominance component.

5. The method of any preceding claim, further comprising generating and transmitting a signal defining the encoded video data, the motion vectors used to encode the video data, block partition data and reference frame indices for the motion vectors.

6. The method of Claim 5, wherein, for each macroblock:

the block partitioning is the same in the first colour component data and the second colour component data;

each motion vector for a block of the second colour component is calculated using the same reference frame as the motion vector for the corresponding block of the first colour component; and

the signal is generated and transmitted so as to specify the block partitioning and the reference frame indices for the motion vectors of one of the colour components but not the other of the colour components.

7. The method of Claim 5 or Claim 6, wherein:

for each block of the second colour component data, a difference is calculated between the motion vector for the block of the second colour component data and a separate motion vector to generate difference data; and

the difference data is transmitted in the signal to define the motion vectors of the second colour component.

8. The method of Claim 7, wherein the separate motion vector comprises the motion vector for the corresponding block of the first colour component.

9. The method of any preceding claim, wherein the separate motion vectors calculated for the blocks using the second colour component data are calculated using both the second colour component data and also third colour component data.

10. A method of decoding encoded frames of video data, the method comprising:

receiving a bitstream comprising video data having frames of at least first and second colour components divided into macroblocks, each macroblock comprising one or more blocks encoded using at least one motion vector, and motion vector information defining, for each macroblock, whether the video data of the second colour component block(s) therein is encoded using motion vector(s) of the first colour component or motion vector(s) of the second colour component;

adaptively decoding the encoded video data in accordance with the motion vector information such that, for each macroblock:

each block of the first colour component data is decoded by calculating a motion vector for the block using previously decoded data of the first colour component and decoding the video data of the block using the calculated motion vector of the first colour component;

when the motion vector information defines the encoding of the second colour component as encoding using motion vector(s) of the first colour component, each block of the second colour component is decoded by calculating a motion vector for the block using previously decoded data of the first colour component and decoding the video data of the block using the calculated motion vector of the first colour component; and

when the motion vector information defines the encoding of the second colour component as encoding using motion vector(s) of the second colour component, each block of the second colour component is decoded by calculating a motion vector using previously decoded data of the second colour component, and decoding the video data of the block using the calculated motion vector of the second colour component.

**11.** A method of decoding encoded frames of video data, the method comprising:

receiving a bistream comprising frames of at least first and second colour components divided into macroblocks, each macroblock comprising one or more blocks, and motion vectors for the blocks such that, for some of the macroblocks, the motion vectors comprise motion vectors for blocks of the first colour component alone and, for other macroblocks, the motion vectors comprise motion vectors for blocks of both the first colour component and the second colour component; and

adaptively decoding each encoded macroblock of video data in accordance with the motion vector(s) thereof such that:

when the macroblock has motion vector(s) for blocks of the first colour component alone, the decoding is performed by decoding the video data of both the first colour component and the second colour component using the motion vector(s) for blocks of the first colour component alone; and

when the macroblock has motion vectors for blocks of both the first colour component and the second colour component, the decoding is performed using the motion vector(s) for blocks of the first colour component to decode the video data of the first colour component and using the motion vector(s) for blocks of the second colour component to decode the video data of the second colour component.

**12.** A video data encoder operable to process macroblocks of video data, each macroblock having data of a first colour component and data of a second colour component, comprising:

a motion vector calculator (50) operable to calculate a motion vector for each block of a macroblock in the first colour component data;

a motion vector calculator (60) operable to calculate a motion vector for each block of a macroblock in the second colour component data;

a cost calculator (120, 130, 140, 150) operable to calculate for a macroblock:

- a first encoding cost measure in dependence upon the number of bits resulting from performing a first type of encoding comprising encoding the first and second colour component data of the macroblock using one or more motion vectors for blocks of only the first colour component data and a measure of the distortion of the video data resulting from performing the first type of encoding;

- a second encoding cost measure in dependence upon the number of bits resulting from performing a second type of encoding comprising encoding the first colour component data of the macroblock using one or more motion vectors for blocks of the first colour component data and encoding the second colour component data of the macroblock using one or more motion vectors for blocks of the second colour component data, and a measure of distortion of the video data resulting from performing the second type of encoding;

a selector (150) operable to select between the first type of encoding and the second type of encoding in dependence upon the first and second encoding cost measures.

**13.** An apparatus operable to encode video data for a region of a frame, the video data having first, second and third colour components and the apparatus comprising:

an encoder (50, 60, 110) operable to perform:

a first type of encoding in which the data of the first, second and third colour components is encoded using at least one motion vector determined from the data of the first colour component; and

a second type of encoding in which the data of the first colour component is encoded using at least one motion vector determined from the data of the first colour component, the data of the second colour component is encoded using at least one motion vector determined from the data of the second colour component, and the data of the third colour component is encoded using at least one motion vector determined from the data of the second colour component or the data of the third colour component; and

a selector (120, 130, 140, 150) operable to select between the first type of encoding and the second type of encoding in dependence upon a number of bits resulting from performing the first type of encoding, a number of bits resulting from performing the second type of encoding, a distortion of the video data resulting from performing the first type of encoding, and a distortion of the video data resulting from performing the second type of encoding.

14. A video data decoder, comprising:

a receiver operable to receive a bitstream comprising frames of at least first and second colour components divided into regions and encoded such that, for each region, the first colour component data is encoded using at least one motion vector generated from the first colour component data, and the second colour component data is encoded using at least one motion vector generated from the first colour component data or at least one motion vector generated from the second colour component data, the receiver being further operable to receive information for each region defining whether the second colour component data is encoded using at least one motion vector generated from the first colour component data or at least one motion vector generated from the second colour component data; and

a decoder operable to decode the encoded video data for each region adaptively such that:

the first colour component data is decoded by calculating at least one motion vector for the region using previously decoded data of the first colour component and decoding the video data of the region using the calculated motion vector(s) of the first colour component;

when the information defines the encoding of the second colour component as encoding using motion vector(s) of the first colour component, the second colour component data is decoded by calculating at least one motion vector for the region using previously decoded data of the first colour component and decoding the video data of the region using the calculated motion vector(s) of the first colour component; and

when the information defines the encoding of the second colour component as encoding using motion vector(s) of the second colour component, the second colour component data is decoded by calculating at least one motion vector for the region using previously decoded data of the second colour component and decoding the video data of the region using the calculated motion vector(s) of the second colour component.

15. A computer program product having computer program instructions to program a programmable processing apparatus to become operable to perform a method as set out in at least one of Claims 1 to 11.

**Figure 1**

Figure 2

**Figure 3**

Template Size M

Target Size N

# Figure 4

**EUROPEAN SEARCH REPORT**

Application Number

EP 09 15 5696

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 507 415 A (SAMSUNG ELECTRONICS CO LTD [KR]) 16 February 2005 (2005-02-16)<br>* abstract *<br>* paragraphs [0025] - [0030] *<br>----- | 1-15 | INV.<br>H04N7/26<br>H04N7/36<br>H04N7/50 |
| A | US 2009/003441 A1 (SEKIGUCHI SHUNICHI [JP] ET AL) 1 January 2009 (2009-01-01)<br>* paragraphs [0275] - [0285] *<br>* paragraph [0317] *<br>* paragraphs [0329] - [0335] *<br>----- | 1-15 | |
| A | EP 1 909 508 A (MITSUBISHI ELECTRIC CORP [JP]) 9 April 2008 (2008-04-09)<br>* paragraphs [0004] - [0006] *<br>* paragraphs [0160] - [0168] *<br>* paragraphs [0194], [0219] *<br>* paragraph [0295] *<br>----- | 1-15 | |

TECHNICAL FIELDS
SEARCHED    (IPC)

H04N

The present search report has been drawn up for all claims

| Place of search | Date of completion of the search | Examiner |
|---|---|---|
| Munich | 31 August 2009 | Lindgren, Johan |

## ANNEX TO THE EUROPEAN SEARCH REPORT
## ON EUROPEAN PATENT APPLICATION NO.

EP 09 15 5696

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2009

| Patent document cited in search report | | Publication date | Patent family member(s) | | Publication date |
|---|---|---|---|---|---|
| EP 1507415 | A | 16-02-2005 | CN | 1578477 A | 09-02-2005 |
| | | | JP | 2005039842 A | 10-02-2005 |
| | | | KR | 20050009226 A | 24-01-2005 |
| | | | US | 2009196351 A1 | 06-08-2009 |
| | | | US | 2005013363 A1 | 20-01-2005 |
| US 2009003441 | A1 | 01-01-2009 | WO | 2009001864 A1 | 31-12-2008 |
| | | | US | 2009003448 A1 | 01-01-2009 |
| | | | US | 2009110067 A1 | 30-04-2009 |
| | | | US | 2009003716 A1 | 01-01-2009 |
| | | | US | 2009003717 A1 | 01-01-2009 |
| | | | US | 2009003449 A1 | 01-01-2009 |
| EP 1909508 | A | 09-04-2008 | BR | PI0611672 A2 | 13-01-2009 |
| | | | CA | 2610276 A1 | 25-01-2007 |
| | | | WO | 2007010690 A1 | 25-01-2007 |
| | | | KR | 20080034131 A | 18-04-2008 |
| | | | US | 2009034856 A1 | 05-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6272179 B

**Non-patent literature cited in the description**

- **Sekiguchi et al.** On Separate Color-Plane Prediction for Direct 4:4:4 Video Coding. *Proceedings on 2006 IEEE Conference on Image Processing,* ISBN 1-4244-0481-9

- **Steffen Kamp ; Michael Evertz ; Mathias Wien.** Decoder side motion vector derivation for inter frame video coding. *ICIP,* 2008, 1120-1123